# EUROPEAN PATENT SPECIFICATION

(11) **EP 2 769 567 B1**
(45) Date of publication and mention of the grant of the patent: **29.08.2018**
(21) Application number: 12841738.3
(22) Date of filing: 24.09.2012
(51) Int. Cl.: H04W 8/26, H04W 4/00, H04L 29/06, H04W 12/06, H04L 29/12

(54) **VISITED PCRF S9 SESSION ID GENERATION**
ID-GENERIERUNG FÜR BESUCHTE PCRF-S9-SITZUNG
CRÉATION D'UN ID DE SESSION S9 POUR UNE PCRF VISITÉE

(30) Priority: 18.10.2011 US 201113275903
(43) Date of publication of application: 27.08.2014
(73) Proprietor: Alcatel Lucent, 91620 Nozay (FR)
(72) Inventor: YEUNG, Lui Chu, Kanata, Ontario K2T 0B1 (CA); MA, Haiqing, Nepean, Ontario K2J 0N1 (CA); MANN, Robert, Carp, Ontario K2K 1L0 (CA)
(74) Representative: Wetzel, Emmanuelle
(86) International application number: PCT/CA2012/050668
(87) International publication number: WO 2013/056362

(56) References cited:
- EP-A1- 2 112 780
- WO-A1-03/094478
- CA-A1- 2 524 960
- US-A1- 2005 132 222
- US-A1- 2009 264 097
- US-A1- 2011 161 504
- US-A1- 2012 036 257
- "3rd Generation Partnership Project; Technical Specification Group Core Network and Terminals; Policy and Charging Control (PCC) over S9 reference point; Stage 3 (Release 10)", 3GPP STANDARD; 3GPP TS 29.215, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. V10.2.0, 10 June 2011 (2011-06-10), pages 1-42, XP050552959, [retrieved on 2011-06-10]
- P Calhoun ET AL: "DIAMETER BASE PROTOCOL", Network Working Group, Request for Comments: 3588 (RFC3588)', 1 September 2003 (2003-09-01), XP055149148, Retrieved from the Internet: URL:http://www.ietf.org/rfc/rfc3588.txt.pd f [retrieved on 2014-10-27]

## Description

### TECHNICAL FIELD

Various exemplary embodiments disclosed herein relate generally to telecommunications networks.

### BACKGROUND

As the demand increases for varying types of applications within mobile telecommunications networks, service providers must constantly upgrade their systems in order to reliably provide this expanded functionality. What was once a system designed simply for voice communication has grown into an all-purpose network access point, providing access to a myriad of applications including text messaging, multimedia streaming, and general Internet access. In order to support such applications, providers have built new networks on top of their existing voice networks, leading to a less-than-elegant solution. As seen in second and third generation networks, voice services must be carried over dedicated voice channels and directed toward a circuit-switched core, while other service communications are transmitted according to the Internet Protocol (IP) and directed toward a different, packet-switched core. This led to unique problems regarding application provision, metering and charging, and quality of experience (QoE) assurance.

In an effort to simplify the dual core approach of the second and third generations, the 3rd Generation Partnership Project (3GPP) has recommended a new network scheme it terms "Long Term Evolution" (LTE). In an LTE network, all communications are carried over an IP channel from user equipment (UE) to an all-IP core called the Evolved Packet Core (EPC). The EPC then provides gateway access to other networks while ensuring an acceptable QoE and charging a subscriber for their particular network activity.

The 3GPP generally describes the components of the EPC and their interactions with each other in a number of technical specifications. Specifically, 3GPP TS 29.212, 3GPP TS 29.213, 3GPP TS 29.214, and 3GPP TS 29.215 describe the Policy and Charging Rules Function (PCRF), Policy and Charging Enforcement Function (PCEF), Bearer Binding and Event Reporting Function (BBERF) of the EPC, and Policy and Charging Control (PCC) Over S9 Reference Point. These specifications further provide some guidance as to how these elements interact in order to provide reliable data services and charge subscribers for use thereof. EP2112780 relates to a method involving receiving a roaming charging request sent from a service gateway located in a visited area. The follow-up roaming charging strategy is determined based on the roaming charging request combined with the charging control strategy. The charging process is performed based on the determined roaming charging strategy. US 2011/161504 relates to a transmission end policy and charging enforcement function (PCRF) issuing policy of control information to a corresponding application function (AP) session according to the unique identification information carried in the S9 session while issuing policy control information, so that the application process of the S9 roaming interface can be realized in a policy and charging control framework.

### SUMMARY

The present invention relates to a method for generating a S9 session ID in a network node and a corresponding tangible and non-transitory machine-readable storage medium as claimed in independent claims 1 and 9. Preferred embodiments are defined in the dependent claims. A brief summary of various exemplary embodiments is presented below. Some simplifications and omissions may be made in the following summary, which is intended to highlight and introduce some aspects of the various exemplary embodiments, but not to limit the scope of the invention. Detailed descriptions of a preferred exemplary embodiment adequate to allow those of ordinary skill in the art to make and use the inventive concepts will follow in later sections.

Various exemplary embodiments relate to a method performed by a network node for generating a S9 session ID, the method including: receiving, at the network node, an attachment request from a user equipment (UE); creating a DIAMETER session ID; attaching a timestamp and UE ID to the DIAMETER session ID resulting in a S9 session ID; and initiating a S9 session with a home PCRN using the S9 session ID.

Various exemplary embodiments relate to a tangible and non-transitory machine-readable storage medium encoded with instructions for execution by a network node for generating a S9 session ID, the tangible and non-transitory machine-readable storage medium including: instructions for receiving, at the network node, an attachment request from a user equipment (UE); instructions for creating a DIAMETER session ID; instructions for attaching a timestamp and UE ID to the DIAMETER session ID resulting in a S9 session ID; and instructions for initiating a S9 session with a home PCRN using the S9 session ID.

### BRIEF DESCRIPTION OF THE DRAWINGS

In order to better understand various exemplary embodiments, reference is made to the accompanying drawings, wherein:
FIG. 1 illustrates an exemplary subscriber network for providing various data services;
FIG. 2 illustrates an exemplary subscriber network 200 for providing roaming access to various data services; and
FIG. 3 is a block diagram illustrating a method for creating a S9 session ID.

To facilitate understanding, identical reference numerals have been used to designate elements having substantially the same or similar structure and/or substantially the same or similar function.

### DETAILED DESCRIPTION

When a subscriber roams onto a roaming network, a connection may be made between a visited policy and charging rule node (PCRN) and a home PCRN to control the usage of the visited and home network by the subscriber. The visited network may initiate a S9 session using the DIAMETER protocol to facilitate this connection. The S9 session has a unique session ID as defined by the DIAMETER protocol and the same value must be used throughout the life of a session. The session ID must be globally and eternally unique. The S9 session ID has the following recommended format (the RFC only requires that the session-id start with "<DiameterIdentity>;", the rest is up to the implementor, but must result in meeting the globally and eternally uniqueness criteria:
<DiameterIdentity>;<high 32 bits>;<low 32 bits>[;optional value].
The DiameterIdentity and the high and low 32 bits may be selected in any manner by the visited PCRN, but must be done so in a manner that leads to a unique session ID. Further, as indicated by the portion in square brackets, an optional value may be added by the visited PCRN. Because a visited PCRN may use any method to set the value of the session ID, the session ID may not readily identify the UE associated with the S9 session. Accordingly it may be desirable to provide additional information in the optional value to more clearly identify the UE associated with the S9 session.

Referring now to the drawings, in which like numerals refer to like components or steps, there are disclosed broad aspects of various exemplary embodiments.

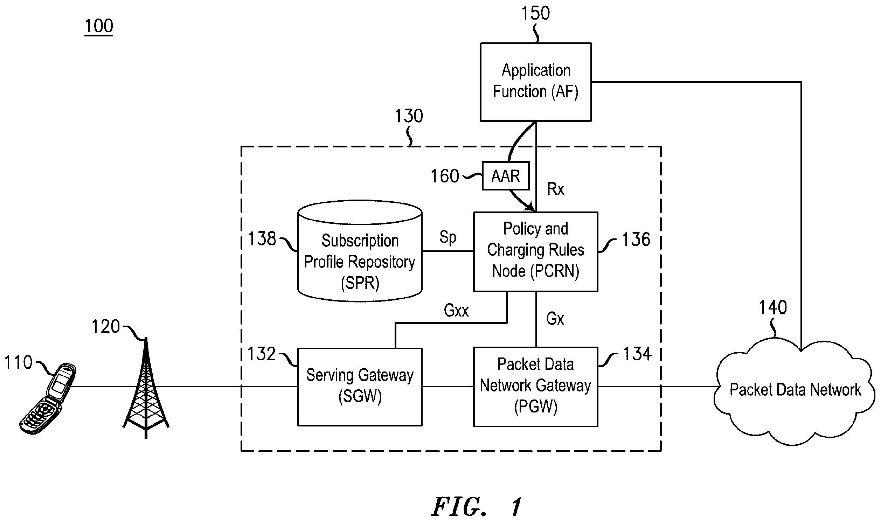

FIG. 1 illustrates an exemplary subscriber network 100 for providing various data services. In various embodiments, subscriber network 100 may be a public land mobile network (PLMN). Exemplary subscriber network 100 may be telecommunications network or other network for providing access to various services. Exemplary subscriber network 100 may include user equipment 110, base station 120, evolved packet core (EPC) 130, packet data network 140, and application function (AF) 150.

User equipment 110 may be a device that communicates with packet data network 140 for providing the end-user with a data service. Such data service may include, for example, voice communication, text messaging, multimedia streaming, and Internet access. More specifically, in various exemplary embodiments, user equipment 110 is a personal or laptop computer, wireless email device, cell phone, tablet, television set-top box, or any other device capable of communicating with other devices via EPC 130.

Base station 120 may be a device that enables communication between user equipment 110 and EPC 130. For example, base station 120 may be a base transceiver station such as an evolved nodeB (eNodeB) as defined by 3GPP standards. Thus, base station 120 may be a device that communicates with user equipment 110 via a first medium, such as radio waves, and communicates with EPC 130 via a second medium, such as Ethernet cable. Base station 120 may be in direct communication with EPC 130 or may communicate via a number of intermediate nodes (not shown). In various embodiments, multiple base stations (not shown) may be present to provide mobility to user equipment 110. Note that in various alternative embodiments, user equipment 110 may communicate directly with EPC 130. In such embodiments, base station 120 may not be present.

Evolved packet core (EPC) 130 may be a device or network of devices that provides user equipment 110 with gateway access to packet data network 140. EPC 130 may further charge a subscriber for use of provided data services and ensure that particular quality of experience (QoE) standards are met. Thus, EPC 130 may be implemented, at least in part, according to the 3GPP TS 29.212, 29.213, and 29.214 standards. Accordingly, EPC 130 may include a serving gateway (SGW) 132, a packet data network gateway (PGW) 134, a policy and charging rules node (PCRN) 136, and a subscription profile repository (SPR) 138.

Serving gateway (SGW) 132 may be a device that provides gateway access to the EPC 130. SGW 132 may be one of the first devices within the EPC 130 that receives packets sent by user equipment 110. Various embodiments may also include a mobility management entity (MME) (not shown) that receives packets prior to SGW 132. SGW 132 may forward such packets toward PGW 134. SGW 132 may perform a number of functions such as, for example, managing mobility of user equipment 110 between multiple base stations (not shown) and enforcing particular quality of service (QoS) characteristics for each flow being served. In various implementations, such as those implementing the Proxy Mobile IP standard, SGW 132 may include a Bearer Binding and Event Reporting Function (BBERF). In various exemplary embodiments, EPC 130 may include multiple SGWs (not shown) and each SGW may communicate with multiple base stations (not shown).

Packet data network gateway (PGW) 134 may be a device that provides gateway access to packet data network 140. PGW 134 may be the final device within the EPC 130 that receives packets sent by user equipment 110 toward packet data network 140 via SGW 132. PGW 134 may include a policy and charging enforcement function (PCEF) that enforces policy and charging control (PCC) rules for each service data flow (SDF). Therefore, PGW 134 may be a policy and charging enforcement node (PCEN). PGW 134 may include a number of additional features such as, for example, packet filtering, deep packet inspection, and subscriber charging support. PGW 134 may also be responsible for requesting resource allocation for unknown application services.

Policy and charging rules node (PCRN) 136 may be a device or group of devices that receives requests for application services, generates PCC rules, and provides PCC rules to the PGW 134 and/or other PCENs (not shown). PCRN 136 may be in communication with AF 150 via an Rx interface. As described in further detail below with respect to AF 150, PCRN 136 may receive an application request in the form of an Authentication and Authorization Request (AAR) 160 from AF 150. Upon receipt of AAR 160, PCRN 136 may generate at least one new PCC rule for fulfilling the application request 160.

PCRN 136 may also be in communication with SGW 132 and PGW 134 via a Gxx and a Gx interface, respectively. PCRN 136 may receive an application request in the form of a credit control request (CCR) (not shown) from SGW 132 or PGW 134. As with AAR 160, upon receipt of a CCR, PCRN may generate at least one new PCC rule for fulfilling the application request 170. In various embodiments, AAR 160 and the CCR may represent two independent application requests to be processed separately, while in other embodiments, AAR 160 and the CCR may carry information regarding a single application request and PCRN 136 may create at least one PCC rule based on the combination of AAR 160 and the CCR. In various embodiments, PCRN 136 may be capable of handling both single-message and paired-message application requests.

Upon creating a new PCC rule or upon request by the PGW 134, PCRN 136 may provide a PCC rule to PGW 134 via the Gx interface. In various embodiments, such as those implementing the PMIP standard for example, PCRN 136 may also generate QoS rules. Upon creating a new QoS rule or upon request by the SGW 132, PCRN 136 may provide a QoS rule to SGW 132 via the Gxx interface.

Subscription profile repository (SPR) 138 may be a device that stores information related to subscribers to the subscriber network 100. Thus, SPR 138 may include a machine-readable storage medium such as read-only memory (ROM), random-access memory (RAM), magnetic disk storage media, optical storage media, flash-memory devices, and/or similar storage media. SPR 138 may be a component of PCRN 136 or may constitute an independent node within EPC 130. Data stored by SPR 138 may include an identifier of each subscriber and indications of subscription information for each subscriber such as bandwidth limits, charging parameters, and subscriber priority.

Packet data network 140 may be any network for providing data communications between user equipment 110 and other devices connected to packet data network 140, such as AF 150. Packet data network 140 may further provide, for example, phone and/or Internet service to various user devices in communication with packet data network 140.

Application function (AF) 150 may be a device that provides a known application service to user equipment 110. Thus, AF 150 may be a server or other device that provides, for example, a video streaming or voice communication service to user equipment 110. AF 150 may further be in communication with the PCRN 136 of the EPC 130 via an Rx interface. When AF 150 is to begin providing known application service to user equipment 110, AF 150 may generate an application request message, such as an authentication and authorization request (AAR) 160 according to the Diameter protocol, to notify the PCRN 136 that resources should be allocated for the application service. This application request message may include information such as an identification of the subscriber using the application service, an IP address of the subscriber, an APN for an associated IP-CAN session, and/or an identification of the particular service data flows that must be established in order to provide the requested service. AF 150 may communicate such an application request to the PCRN 136 via the Rx interface.

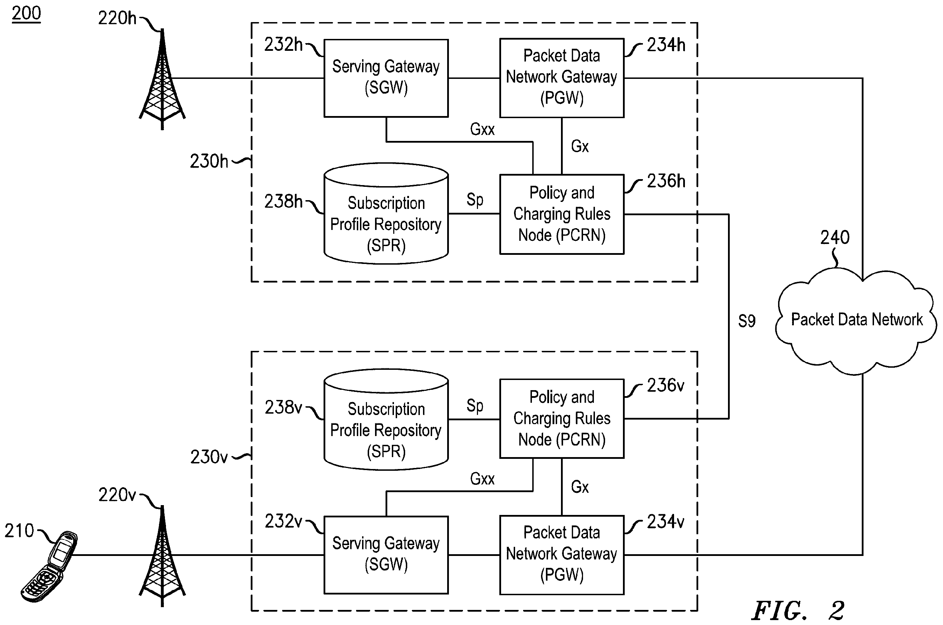

FIG. 2 illustrates an exemplary subscriber network 200 for providing roaming access to various data services. Exemplary subscriber network 200 may correspond to exemplary network 100. EPC 230v may provide visited access to packet data network 240 for roaming UEs such as UE 210, whereby traffic associated with UE 210 flows through SGW 232v and PGW 234v. In various embodiments, EPC 230v and EPC 230h may connect to the same packet data network 240 (as shown) or may connect to two independent networks. Alternatively or additionally, EPC 230v may provide home-routed access to packet data network 240 for roaming UEs such as UE 210, whereby traffic associated with UE 210 flows through SGW 232v and PGW 234h. Accordingly, SGW 232v may be in communication with PGW 234h. Likewise, SGW 232h may be in communication with PGW 234v, such that EPC 230h may provide similar access to other roaming UEs (not shown) attached to base station 220h.

UE 210 may be in communication with a base station 220v but outside the range of base station 220h. Base station 220v, however, may not connect to a home public land mobile network (HPLMN) for the UE 210. Instead, base station 220v may belong to a visited public land mobile network (VPLMN) of the UE 210 and, as such, may not have access to various data associated with the UE 210, a subscriber associated therewith, and/or other data useful or necessary in providing connectivity to UE 210. For example, SPR 238v may not include information associated with UE 210; instead, such information may be stored in SPR 238h. To enable the provision of service based on subscriber information stored in SPR 238h, PCRN 236v may communicate with PCRN 236h via an S9 session.

In various embodiments, PCRN 236v may forward requests associated with UE 210 to PCRN 236h via an S9 session. PCRN 236h may process these messages to, for example, generate PCC and/or QoS rules. PCRN 236h may then forward these rules to PCRN 236v for installation on PGW 234v and/or SGW 232v. In the case of home-routed access, PCRN 236h may also install PCC rules directly on PGW 234h. In view of the cooperative nature of PCRNs 236h, 236v, these devices may be referred to as "partner devices" with respect to each other.

In various embodiments, each partner device may be capable of operating as a home device and a visited device. For example, if another roaming UE (not shown) were attached to base station 220h, PCRN 236h may be additionally capable of forwarding requests to PCRN 236v and PCRN 236v may be capable of returning appropriate rules to PCRN 236h for installation.

In establishing an S9 session, PCRNs 236h, 236v may be configured to negotiate a set of features that will be supported for the session. In various embodiments, PCRNs 236h, 236v may each be configured to perform this negotiation with respect to a default set of features such as, for example, the set of all features supported by the device. In such embodiments, the negotiated set of supported features may simply be the set of all features supported by both devices.

An embodiment of a method for generating a S9 session ID will now be described. Because the DIAMETER protocol session ID allows for an optional value, information relating to the UE may be included to more easily identify the UE associated with a S9 message. Two specific pieces of information that may be used are a timestamp and a UE ID. The timestamp may indicate when the UE attached to the VPLMN. The timestamp may be a GMT time in the following form: yyyyMMddHHmmSS. Other timestamp formats may be used as well. Further, the timestamp may indicate the time of some other event rather than the UE attachment time. The UE ID may be an International Mobile Subscriber Identity (IMSI), a National Mobile Subscriber Identity (NMSI), or a Network Access Identifier (NAI). If the UE uses another type of ID that may be used as well. Accordingly, the format of the S9 session ID may become:
<DiameterIdentity>;<high 32 bits>;<low 32 bits>;<timestamp>;<UE ID>.

For example, a UE with a UE ID of 1234567 may have attached to a VPLMN with an ID 71234 at midnight on October 3, 2011. Accordingly the S9 session ID may become:
pcrf.epc.mnc34.mcc712.3gppnetwork.org;0; 1;20111003000000; 1234567.
The S9 session ID may be stored in the visited PCRN. If the S9 session ID is longer than the space allocated for storing the S9 session ID, then the S9 session ID may be truncated.

Information other than the timestamp or the UE ID may also be used in the S9 session ID. The timestamp and UE ID may be beneficial to the recipients of the S9 session ID. For example, the timestamp may be useful in troubleshooting problems that arise regarding a S9 session. Further, the UE ID allows a home PCRN to quickly identify the subscriber associated with a specific S9 message, and hence, subscriber information related to the S9 message. Also, attaching the timestamp before the UE ID may provide benefits when the S9 session ID is truncated, but the UE ID may be attached before the timestamp as well. If the S9 session ID is truncated, and hence a portion of the UE ID is lost, the upper digits of the UE ID may still provide beneficial information helping to properly route the S9 message within the HPLMN.

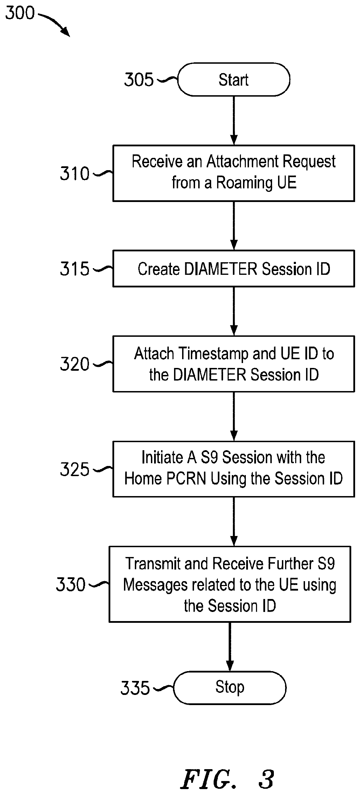

FIG. 3 is a block diagram illustrating a method for creating a S9 session ID. The method 300 begins at step 305. Next, the visited VPLMN may receive an attachment request from a roaming UE 310. The visited PCRN in the VPLMN receives the attachment request and determines that the UE is not a subscriber of the VPLMN. The visited PCRN may determine the HPLMN associated with the UE, and then may initiate a S9 session in order to allow communication between the visited PCRN and the home PCRN. During the initiation of a S9 session, the visited PCRN may generate a S9 session ID. First, the standard DIAMETER portion of the S9 session ID may be generated 320. Next, the timestamp indicating the time when the UE requested attachment to the VPLM and the UE ID may be attached to the S9 session ID. Next, the generated S9 session ID may be used by the visited PCRN to initiate a S9 session 325. Once, the S9 session has been established, the visited PCRN may send S9 messages related to the UE to the home PCRN 330. Further, the home PCRN may send S9 messages related to the UE to the visited PCRN 330. The method may then end 335.

As discussed above, attaching a timestamp and UE ID to the S9 session ID may provide benefits in troubleshooting problems and dispute resolution. Further, the use of the UE ID may allow for fast correlation of a S9 message with a specific subscriber and the subscriber's sessions.

It should be apparent from the foregoing description that various exemplary embodiments of the invention may be implemented in hardware and/or firmware. Furthermore, various exemplary embodiments may be implemented as instructions stored on a machine-readable storage medium, which may be read and executed by at least one processor to perform the operations described in detail herein. A machine-readable storage medium may include any mechanism for storing information in a form readable by a machine, such as a personal or laptop computer, a server, or other computing device. Thus, a tangible and non-transitory machine-readable storage medium may include read-only memory (ROM), random-access memory (RAM), magnetic disk storage media, optical storage media, flash-memory devices, and similar storage media.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in machine readable media and so executed by a computer or processor, whether or not such computer or processor is explicitly shown.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be effected while remaining within the scope of the invention. Accordingly, the foregoing disclosure, description, and figures are for illustrative purposes only and do not in any way limit the invention, which is defined only by the claims.

## Claims

1. A method performed by a network node (236v) for generating a S9 session ID, the method comprising:
receiving, at the network node (236v), an attachment request from a user equipment, UE, (210);
creating a DIAMETER session ID;
attaching a timestamp and UE ID to the DIAMETER session ID resulting in a S9 session ID, wherein the timestamp indicates a time of the user equipment attachment request; and
initiating a S9 session with a home PCRN (236h) using the S9 session ID.

2. The method of claim 1,
further comprising transmitting, by the network node (236v), S9 messages relating to the UE (210) using the S9 session ID.

3. The method of claims 1 and 2,
further comprising receiving, by the network node (236v), S9 messages relating to the UE (210) using the S9 session ID.

4. The method of claims 1 to 3,
wherein the UE ID is an International Mobile Network Identifier.

5. The method of claims 1 to 3,
wherein the UE ID is a National Mobile Network Identifier.

6. The method of claims 1 to 3,
wherein the UE ID is a Network Access Identifier.

7. The method of claims 1 to 6,
further comprising storing, by the network node (236v), the S9 session ID.

8. The method of claim 7,
further comprising truncating, by the network node (236v), the S9 session ID prior to storing the S9 session ID.

9. A tangible and non-transitory machine-readable storage medium encoded with instructions for execution by a network node (236v) for generating a S9 session ID, the tangible and non-transitory machine-readable storage medium comprising:
instructions for receiving, at the network node (236v), an attachment request from a user equipment, UE, (210);
instructions for creating a DIAMETER session ID;
instructions for attaching a timestamp and UE ID to the DIAMETER session ID resulting in a S9 session ID, wherein the timestamp indicates a time of the user equipment attachment request; and
instructions for initiating a S9 session with a home PCRN (236h) using the S9 session ID.

10. The tangible and non-transitory machine-readable storage medium of claim 9,
further comprising instructions for transmitting, by the network node (236v), S9 messages relating to the UE (210) using the S9 session ID.

11. The tangible and non-transitory machine-readable storage medium of claims 9 and 10,
further comprising instructions for receiving, by the network node (236v), S9 messages relating to the UE (210) using the S9 session ID.

12. The tangible and non-transitory machine-readable storage medium of claims 9 to 12,
further comprising instructions for storing, by the network node (236v), the S9 session ID.

13. The tangible and non-transitory machine-readable storage medium of claim 12,
further comprising instructions for truncating, by the network node (236v), the S9 session ID prior to storing the S9 session ID.

## Patentansprüche

1. Verfahren, durchgeführt von einem Netzwerkknoten (236v) zum Erzeugen einer S9-Sitzungs-ID, wobei das Verfahren umfasst:
Empfangen, am Netzwerkknoten (236v), einer Anhangsanforderung von einem Teilnehmergerät, UE, (210);
Erstellen einer DIAMETER-Sitzungs-ID;
Anhängen eines Zeitstempels und einer UE-ID an die DIAMETER-Sitzungs-ID, resultierend in einer S9-Sitzungs-ID, wobei der Zeitstempel eine Zeit der Anhangsanforderung des Teilnehmergeräts anzeigt; und
Initiieren einer S9-Sitzung mit einem Home-PCRN (236h) unter Verwenden der S9-Sitzungs-ID.

2. Verfahren nach Anspruch 1, weiterhin umfassend das Übertragen, durch den Netzwerkknoten (236v), von S9-Nachrichten, die sich auf das UE (210) beziehen, unter Verwenden der S9-Sitzungs-ID.

3. Verfahren nach den Ansprüchen 1 bis 2, weiterhin umfassend das Empfangen, durch den Netzwerkknoten (236v), von S9-Nachrichten, die sich auf das UE (210) beziehen, unter Verwenden der S9-Sitzungs-ID.

4. Verfahren nach Anspruch 1 bis 3, wobei die UE-ID eine internationale Mobilfunknetzkennung ist.

5. Verfahren nach Anspruch 1 bis 3, wobei die UE-ID eine nationale Mobilfunknetzkennung ist.

6. Verfahren nach Anspruch 1 bis 3, wobei die UE-ID eine Netzwerkzugangskennung ist.

7. Verfahren nach Anspruch 1 bis 6, weiterhin umfassend das Speichern, durch den Netzwerkknoten (236v), der S9-Sitzungs-ID.

8. Verfahren nach Anspruch 7, weiterhin umfassend das Abschneiden, durch den Netzwerkknoten (236v), der S9-Sitzungs-ID vor dem Speichern der S9-Sitzungs-ID.

9. Greifbares und nicht transitorisches maschinenlesbares Speichermedium, das mit Befehlen codiert ist für die Ausführung durch einen Netzwerkknoten (236v) zum Erzeugen der S9-Sitzungs-ID, wobei das greifbare und nicht transitorische maschinenlesbare Speichermedium umfasst:
Befehle zum Empfangen, an dem Netzwerkknoten (236v), einer Anhangsanforderung von einem Teilnehmergerät, UE, (210);
Befehle zum Erstellen einer DIAMETER-Sitzungs-ID;
Befehle zum Anhängen eines Zeitstempels und einer UE-ID an die DIAMETER-Sitzungs-ID, resultierend in einer S9-Sitzungs-ID, wobei der Zeitstempel eine Zeit der Anhangsanforderung des Teilnehmergeräts anzeigt; und
Befehle zum Initiieren einer S9-Sitzung mit einem Home-PCRN (236h) unter Verwenden der S9-Sitzungs-ID.

10. Greifbares und nicht transitorisches maschinenlesbares Speichermedium nach Anspruch 9, weiterhin umfassend Befehle zum Übertragen, durch den Netzwerkknoten (236v), von S9-Nachrichten, die sich auf das UE (210) beziehen, unter Verwenden der S9-Sitzungs-ID.

11. Greifbares und nicht transitorisches maschinenlesbares Speichermedium der Ansprüche 9 und 10, weiterhin umfassend Befehle zum Empfangen, durch den Netzwerkknoten (236v), von S9-Nachrichten, die sich auf das UE (210) beziehen, unter Verwenden der S9-Sitzungs-ID.

12. Greifbares und nicht transitorisches maschinenlesbares Speichermedium der Ansprüche 9 bis 12, weiterhin umfassend Befehle zum Speichern, durch den Netzwerkknoten (236v), der S9-Sitzungs-ID.

13. Greifbares und nicht transitorisches maschinenlesbares Speichermedium nach Anspruch 12, weiterhin umfassend Befehle zum Abschneiden, durch den Netzwerkknoten (236v), der S9-Sitzungs-ID vor dem Speichern der S9-Sitzungs-ID.

## Revendications

1. Procédé effectué par un noeud de réseau (236v) pour générer un ID de session S9, le procédé comprenant les étapes suivantes :
recevoir, au niveau du noeud de réseau (236v), une demande de rattachement en provenance d'un équipement utilisateur, UE, (210) ;
créer un ID de session DIAMETER ;
rattacher une estampille temporelle et un ID d'UE à l'ID de session DIAMETER ayant pour résultat un ID de session S9, dans lequel l'estampille temporelle indique un temps de la demande de rattachement d'équipement utilisateur ; et
initier une session S9 avec un PCRN domestique (236h) en utilisant l'ID de session S9.

2. Procédé selon la revendication 1,
comprenant en outre la transmission, par le noeud de réseau (236v), de messages S9 relatifs à l'UE (210) en utilisant l'ID de session S9.

3. Procédé selon les revendications 1 et 2,
comprenant en outre la réception, par le noeud de réseau (236v), de messages S9 relatifs à l'UE (210) en utilisant l'ID de session S9.

4. Procédé selon les revendications 1 à 3,
dans lequel l'ID d'UE est un Identifiant de Réseau Mobile International.

5. Procédé selon les revendications 1 à 3,
dans lequel l'ID d'UE est un Identifiant de Réseau Mobile National.

6. Procédé selon les revendications 1 à 3,
dans lequel l'ID d'UE est un Identifiant d'Accès au Réseau.

7. Procédé selon les revendications 1 à 6,
comprenant en outre le stockage, par le noeud de réseau (236v), de l'ID de session S9.

8. Procédé selon la revendication 7,
comprenant en outre le tronquage, par le noeud de réseau (236v), de l'ID de session S9 avant le stockage de l'ID de session S9.

9. Support de stockage lisible par machine tangible et non transitoire encodé avec des instructions pour l'exécution par un noeud de réseau (236v) pour générer un ID de session S9, le support de stockage lisible par machine tangible et non transitoire comprenant :
des instructions pour recevoir, au niveau du noeud de réseau (236v), une demande de rattachement en provenance d'un équipement utilisateur, UE, (210) ; des instructions pour créer un ID de session DIAMETER ;
des instructions pour rattacher une estampille temporelle et un ID d'UE à l'ID de session DIAMETER ayant pour résultat un ID de session S9, dans lequel l'estampille temporelle indique un temps de la demande de rattachement d'équipement utilisateur ; et
des instructions pour initier une session S9 avec un PCRN domestique (236h) en utilisant l'ID de session S9.

10. Support de stockage lisible par machine tangible et non transitoire selon la revendication 9,
comprenant en outre des instructions pour transmettre, par le noeud de réseau (236v), des messages S9 relatifs à l'UE (210) en utilisant l'ID de session S9.

11. Support de stockage lisible par machine tangible et non transitoire selon les revendications 9 et 10,
comprenant en outre des instructions pour recevoir, par le noeud de réseau (236v), des messages S9 relatifs à l'UE (210) en utilisant l'ID de session S9.

12. Support de stockage lisible par machine tangible et non transitoire selon les revendications 9 à 12,
comprenant en outre des instructions pour stocker, par le noeud de réseau (236v), l'ID de session S9.

13. Support de stockage lisible par machine tangible et non transitoire selon la revendication 12,
comprenant en outre des instructions pour tronquer, par le noeud de réseau (236v), l'ID de session S9 avant le stockage de l'ID de session S9.
